# EUROPEAN PATENT SPECIFICATION

(11) **EP 2 947 183 B1**
(45) Date of publication and mention of the grant of the patent: **20.12.2017**
(21) Application number: 15168534.4
(22) Date of filing: 20.05.2015
(51) Int. Cl.: C25F 3/02, B23H 3/04, B23H 3/08, B23H 9/14

(54) **ELECTROCHEMICAL MACHINING METHOD USING AN ELECTROLYTE**
ELEKTROCHEMISCHES BEARBEITUNGSVERFAHREN UNTER VERWENDUNG EINES ELEKTROLYTEN
PROCÉDÉ D'USINAGE ÉLECTROCHIMIQUE UTILISANT UN ÉLECTROLYTE

(30) Priority: 21.05.2014 CN 201410217873
(43) Date of publication of application: 25.11.2015
(73) Proprietor: General Electric Company, Schenectady, NY 12345 (US)
(72) Inventor: Zhu, Hui, 2012013 Shanghai 31 (CN); Xu, Huiyu, 201203 Shanghai 31 (CN); Zhou, Hong, 2012013 Shanghai 31 (CN); Wu, Yingna, 201203 Shanghai 31 (CN); Xu, Wenlong, 201203 Shanghai 31 (CN)
(74) Representative: Foster, Christopher Michael

(56) References cited:
- EP-A2- 2 671 660
- CN-A- 101 029 412
- JP-A- S62 208 823
- US-A1- 2003 095 917
- US-A1- 2008 142 375
- US-A1- 2009 107 851
- US-A1- 2009 139 875
- US-A1- 2013 280 124

## Description

### FIELD OF THE INVENTION

Embodiments of the invention relate to an electrochemical machining method using an electrolyte.

### BACKGROUND OF THE INVENTION

Electrochemical machining is to remove materials from a workpiece by electrochemical force instead of mechanical force, and is widely used to drill bores in some conductive work pieces/parts for which machining is very difficult. For example, as a form of electrochemical machining, shaped-tube electrolytic machining (shaped-tube electrolytic machining, STEM) boring is a contactless electrochemical boring process, in which a vacuum electrode (tube-shaped electrode) on which voltage is imposed is used to remove material and obtain the bores with high aspect ratio. STEM boring technique can be used to drill small and deep bores in conductive work pieces, and drill the cooled air holes in turbine blades.
In electrochemical machining, a metal base (work piece) is used as anode and a tool electrode as cathode. The cathode obtains electrons and releases OH-, and the anode releases electrons, which gradually become metal ions. The metal ions will combine with OH- to form a deposit, which blocks the machining gaps. For example, the deposit from electrochemical machining and the debris from the metal base form sludge, which blocks the bores and stops subsequent machining. That has become a serious problem, especially for deep bore machining. The blockage will directly influence the depth during deep bore machining. Traditional method is to add strong acid to the electrolyte in order to dissolve the metal hydroxides deposit and debris. However, a strongly acidic electrolyte is very dangerous for machining, not only causes more difficult operation and higher operation cost, but also corrodes the work pieces and influence the performance of the work pieces.

Thus, it is necessary to offer a more environment-friendly electrochemical machining electrolyte, especially for electrochemical boring processing. Compositions and methods are disclosed in US 2008/142375 A1, CN 101 029 412 A, US 2013/280124 A1, US 2003/095917 A1, US 2009/139875 A1, JP S62 208823 A, EP 2 671 660 A2, and US 2009/107851 A1.

### DESCRIPTION OF THE INVENTION

This invention relates to an electrochemical machining method defined in the appended claims.

### BRIEF INTRODUCTION OF THE DRAWINGS

The following drawings are used to describe the examples of this invention and better understand this invention, wherein:
Fig. 1 shows a demonstrative shaped-tube electrolytic machining (STEM) boring system is used to drill small-diameter deep holes in a workpiece;
Fig. 2 shows a demonstrative boring method;
Fig. 3 shows the front end of a demonstrative tube-shaped electrode for STEM; and
Fig. 4 shows a cross section of a demonstrative tube-shaped electrode for STEM.

### DETAILED DESCRIPTION OF THE PREFERRED EMBODIMENTS

Embodiments of the invention will be described. The technical or scientific terms in the claim and specification shall have the general meanings which can be understood by ordinary technicians in the technical field of the invention unless otherwise defined. The word "a" or "an" in the claim and specification of the disclosure does not represent the quantity restriction, but at least one. The term "include" or "contain" means that the element or component appearing before "include" or "contain" covers the element or component appearing after "include" or "contain" and equal, not excludes other elements or components.

The approximation sentences used in this disclosure can be used for quantitative description to indicate that the quantity is allowed to change to some extent without change in basic functions. Thus, the number with "about", "approximately", etc. before it is not limited to this accurate value. In addition, in the description "about the first value ∼ the second value", "about" revises both the first and second values. In some cases, approximation sentences may relate to the accuracy of the testing equipment.

The values mentioned in this disclosure include all the values from low to high in one unit increment provided that the interval between any low and low values is at least two units. For instance, if the quantity of a component or the value of a process parameter, such as temperature, pressure, time, etc., is 1-90, more preferably 20-80, the most preferably 30-70, it means that the values between 15 and 85, between 22 and 68, between 43 and 51, between 30 and 32, etc. have been expressly listed in this specification. The value below 1, such as 0.0001, 0.001, 0.01 or 0.1, is regarded as an adequate unit. The above motioned examples are only for illustration. In fact, all the listed values from the lowest value to the highest value are regarded as listed in this specification in an express manner.

The examples in this disclosure relate a mild electrochemical machining electrolyte, composed of solvent, inorganic salt, and chelating agent, which contains organic phosphonate. This electrolyte is weak acidic or neutral and more environment-friendly. In some examples, the said electrolyte has the pH of about 4-7, or preferably 4-6, or more preferably 5-6. The said electrolyte can be used for electrochemical machining, especially electrochemical boring process. During electrochemical machining, the organic phosphonic acid or organic phosphonate in the electrolyte will chelate the metal ions to prevent or reduce the formation of metal hydroxides deposit. Thus, the electrolyte is used for boring in the metal base to prevent or mitigate sludge blockage during boring, so the small-diameter deep holes with a high aspect ratio, such as small-diameter deep holes with the aspect ratio as high as 300: 1 or above and the diameter of less than 2 mm.
The solvent, which is water, and the inorganic salt may be mixed to form the aqueous solution of this inorganic salt. The inorganic salt is neutral. The suitable inorganic salts include, but not limited to, NaNO₃, NaCl, and KNO₃. The organic phosphonate is: 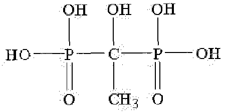 1-Hydroxyethylidene)-1,1-bis-phosphonic acid(C₂H₈O₇P₂) or its sodium salt.

In some examples, the organic phosphonate is: 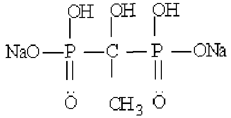 C₂H₆O₇P₂Na₂

They are weak acidic or neutral.

The organic phosphonate content of the electrolyte is about 1-30wt.%, or preferably about 1-20%, or more preferably about 1-5%.

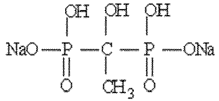

In an example, the organic phosphonate is C₂H₆O₇P₂Na₂, and the electrolyte is prepared from disodium of this organic phosphonic acid and 20wt.% NaNO₃ solution composed of water and NaNO₃, and has the pH value of about 4.0-6.0.

The metal bases suitable for electrochemical machining by the electrolyte include, but not limited to, Ni, Ti, Fe and their alloys.

Embodiments of the invention relate to an electrochemical machining method using the electrolyte, especially an electrochemical boring method, such as STEM boring method, in which, a tool electrode is fed forward in order to drill the base and electrolyte is used to rinse the front zone of the said tool electrode. STEM boring is taken as an exampled to describe the electrochemical machining method.

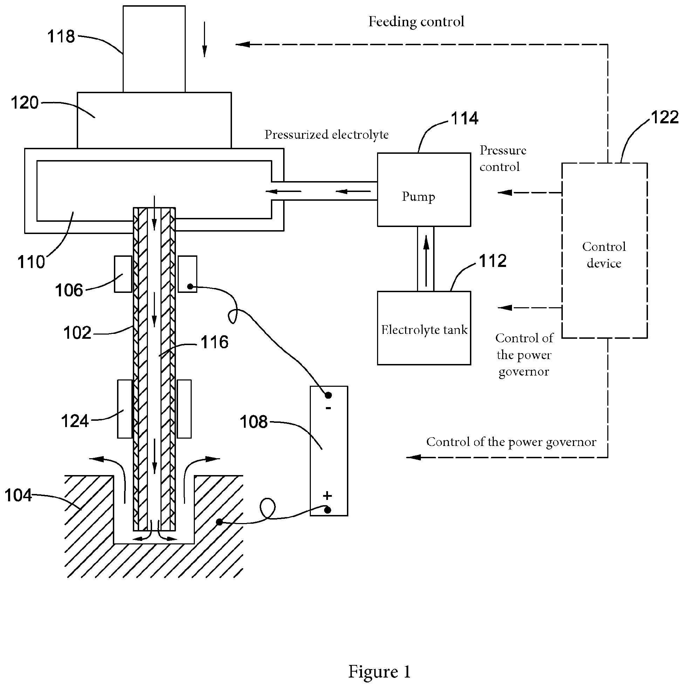

In a demonstrative STEM boring process, a tube-shaped electrode 102 can be used to drill a small-diameter deep hole in the workpiece 104 as shown in Fig. 1. The tube-shaped electrode 102 is held by a clamping device 106, which is also connected as a power connector to the cathode of the power source 108. The anode of the power source 108 is connected to the workpiece 104. The tube-shaped electrode 102 has two longitudinally long ends. The front acts on the bored work piece 104, and the other (tail end) is connected to the electrolyte manifold 110, which is connected via the pump 114 to the electrolyte tank 112 holding electrolyte in order that the pump 114 sends the pressurized electrolyte from the electrolyte tank 112 to the electrolyte manifold 11. The tube-shaped electrode 102 has electrolyte passage 116 in it so that the electrolyte flows from the electrolyte manifold 110 to the front end of the electrode where tube-shaped electrode 102 and work piece 104 interact. The drive unit 118 is used to drive the tube-shaped electrode 102 to act. A link mechanism 120 is installed between drive unit 118 and electrolyte manifold 110 connected to the tube-shaped electrode 102 in order to achieve a rigid connection between the drive unit 118 and tube-shaped electrode 102 in order that the drive unit 118 can drive the electrode to correctly feed forward. A control device 122 controls the STEM boring process and provides feeding forward control for the drive unit 118, pressure and electrolyte condition control for the pump 114 and electrolyte tank 112, and control of power governor for the power source 108. To prevent the long tube-shaped electrode 102 from deviation along longitudinal length during STEM boring, a removable guide sleeve 124 can be installed between the work piece 104 and clamping device 106 and used to guide the movement of the tube-shaped electrode 102.

Although the organic phosphonic acid or organic phosphonate in the electrolyte can chelate the metal ions to prevent or reduce deposit, the machining gap between the electrode and workpiece may still unavoidably has some sludge (such as debris and a small amount of deposit during machining process). With increasing bore depth, back pressure in the machining gap decreases, the rinse force of the electrolyte reduces, the sludge flow rate in the machining gap reduces, the sludge may slowly accumulate and finally blocks the bore, and boring can not continue. Thus, the bore is deepened by mitigating or preventing the blockage during boring by other process controls. In some examples, the pressure in the machining gap can be maintained by gradually increasing the input pressure in the entire boring process to avoid blockage caused when the pressure in the machining gap reduces with increasing bore depth. Such method has a defect, i.e. an increase in pressure will increase the probability of electrode vibration, resulting in increased boring instability. In some examples, the blockage during boring process can be mitigated or prevented by controlling the electrode feeding forward. For example, the bore blockage is avoided by gap-type electrode feeding forward, i.e. the electrode stops for a period of time every time that it travels a distance while the electrolyte rinses away the sludge from the machining gap.

In an example, the electrode feeding forward can be controlled in the following steps: (a) the electrode is fed forward a distance along the depth of the drilled bore; (b) the feeding forward is stopped for a period of time; and (c) Steps (a) and (b) are repeated until the bore depth reaches the set value. Every feeding forward distance is either the same or different, and every electrode feeding forward is stopped for either the same or a different period of time. For example, with increasing bore depth, the feeding forward distance can gradually shortened every time, and (or) the feeding forward stop time can be gradually prolonged in order to remove the sludge from the machining gap in time and better prevent blockage. In addition, the electrode feeding forward distance can be about 0.1 mm ∼ about 5 mm, or preferably about 0.1 mm ∼ about 2 mm. The electrode feeding forward stop time can be about 1 s ∼ about 10 s, or preferably about 1 s ∼ about 5 s.

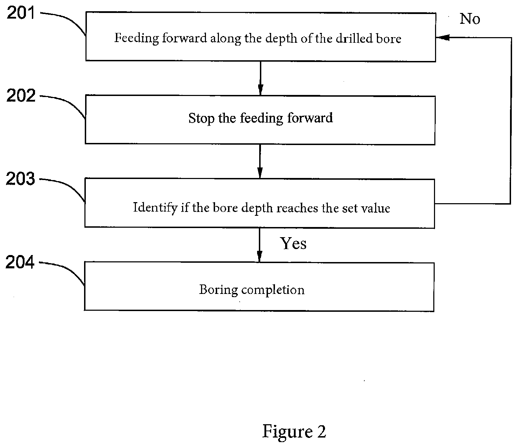

In fact, at the beginning of boring, the pump for electrolyte control can be started so that the electrolyte can rinse the front end of the electrode; the power source is switched on to feed forward the electrode for boring. The electrolyte can rinse the electrode in any direction. For example, the electrolyte can not only rinse the front end of the electrode in the forward direction, but also rinse the front end of the electrode in a reverse direction. In some examples, the front end of the electrode is located in the electrolyte, and the electrolyte can be sucked back from the front end of the electrode through a passage in the electrode so that the electrolyte can rinse the front end of the electrode in a reverse direction. The feeding forward can be stopped by switching off the power source or automatically controlled by other means. Whether the boring continues or not can be determined by identifying whether the bore depth reaches the set value or not. Fig. 2 shows a demonstrative bore and its control process. In Step 201, the electrode is fed forward along the depth of the drilled bore; in Step 202, the feeding forward is stopped; in Step 203, whether the bore depth reaches the set value or not is identified; if yes, boring is stopped in Step 204; if not, Steps 201 and 202 are repeated.

The electrode used in the electrochemical boring method can be any appropriate electrode, such as tube-shaped electrode used in STEM boring method. The tube-shaped electrode may be slim. In some examples, the tube-shaped electrode has the length of 1000 mm or above and diameter of less than 2 mm, such as about 1.6 mm or below. Thus, this tube-shaped electrode can be used to obtain the holes with the aspect ratio of 300: 1 or above.

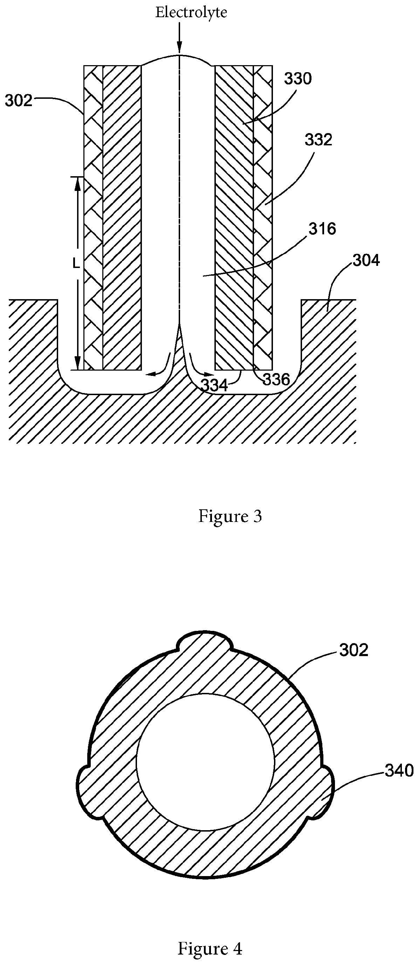

Fig. 3 shows a demonstrative tube-shaped electrode 302. In STEM boring process, the electrolyte from electrolyte passage 316 rinses the electric insulation-free front face 334 of the tube-shaped electrode 302, and the connection 336 between electric insulation and tube-shaped electrode base on this the front face. In an example, the tube-shaped electrode 302 includes a conductive tube 330, and the zone, which is close to the front end on the external lateral surface of the conductive tube 330, is covered with electric insulation at least. This electric insulation is ceramic or enamel coating with thickness of more than 10 micron, or preferably more than 30 micron, or more preferably more than 50 micron. In some applicable examples, the ceramic or enamel coating covers the outside of the entire tube. In some applicable examples, only the zone, which is close to the front end on the external lateral surface, is covered with the ceramic or enamel coating, while other zones form resin or polymer coating.

The external lateral surface of the tube refers to the external peripheral surface of the tube. The zone which is close to the front end on the external lateral surface refers to an external lateral surface which is close to the front end of the tube and has a length, L, (as shown in Fig. 3) from the front end of the tube in the direction of the electrolyte flow in the tube. the length, L, can account for 0.5-10% of the total length of the tube, or preferably 0.5-5%, or more preferably 0.5-3%. In some examples, the length, L, is about 5 mm ∼ 100 mm, or preferably about 5 mm ∼ 50 mm, or more preferably about 5 mm ∼ 30 mm.

The conductive tube can be made of different conducting materials. The metals used to make STEM electrode include, but not limited to, Ti, Cu and stainless steel. The ceramic coating is obtained by micro arc oxidation (MAO), and the enamel coating is obtained by the following method: the pulp containing enamel and adhesive covers the base surface by spray, painting or impregnation; the pulp is heated at about 300∼1,000°C for its diffusion. The ceramic coating formed by MAO and the enamel coating formed by the above method are hard and compact, have very good chemical resistance and low porosity, and provide very good scratch resistance for STEM electrode during deep-hole STEM which lasts for several hours. Furthermore, the coatings have good adhesion to the base, and hard and smooth surface, so they can resist strong electrolyte rinse very well, and will never fall from the electrode base in spite of frequent friction between the electrode and the inner wall of the drilled bore.

To prevent vibration of the slender front end of STEM tube-shaped electrode in the bore, a stable structure can be installed on the external lateral surface of the tube. The stable structure can be a structure which projects beyond the external lateral surface of the tube, or more preferably, a structure which projects beyond the zone close to the front end on the external lateral surface of the tube. In the examples, the stable structure can be an annular protuberance, or includes one or more protuberances. For example, the stable structure includes a tubercular protuberance 340 which projects beyond the zone close to the front end on the external lateral surface of the tube as shown in Fig. 4. The quantity of tubercular protuberance is not limited. Based on actual need, the tube can have two or more tubercular protuberances. For example, a tubercular protuberance can be provided at two sides of the zone close to the front end on the external lateral surface of the tube, or several tubercular protuberances, which are circumferentially distributed in a circle, are provided at the zone close to the front end on the external lateral surface of the tube. The stable structure, such as tubercular protuberance, etc., partially fills the gap between STEM electrode and the bore, and therefore reduces the possible vibration of the front end of STEM electrode. In some examples, the stable structure protrudes about 0.1 mm ∼ 0.5 mm above the external lateral surface of the tube, or preferably 0.1 mm ∼ 0.3 mm.

In some examples, ceramic coating is formed on the zone close to the front end on the external lateral surface of the tube by MAO at least. During MAO, the metal base (i.e. the conductive tube) is placed in the aqueous solution electrolytic bath under pulsed electric field. When a terminal voltage is imposed, spark discharge occurs on the base surface. At high temperature generated from spark discharge, the metal atoms of the base combine with the reactive oxygen ions in the electrolyte solution to form the coating with ceramic structure and characteristics. The coating has good mechanical properties, including, but not limited to, abrasive resistance and hardness. The coating also has strong adhesion to the metal base surface.

In some examples, at least the enamel coating is formed on the zone close to the front end on the external lateral surface of the tube by the following method: the pulp containing enamel and adhesive covers the base surface by spray, painting or impregnation; the pulp is heated at about 300∼1,000°C for its diffusion. In the enamel coating formation method, the pulp containing enamel and adhesive covers the base (the conductive tube) surface by spray, painting or impregnation. In some applicable examples, the pulp is sprayed to the base surface by a static spraying unit, or painted on the base surface by a brush, etc. In some applicable examples, the base is wholly or partially impregnated in the pulp so that at least a part of the base is covered with the pulp. The pulp containing enamel and adhesive and covering the base by spray, painting or impregnation is absorbed on the base surface to form the pulp layer, which is heated to about 300∼1,000°C for its diffusion and uniform flow to form the enamel coating. The enamel coating formed by the method has good mechanical performance, strong adhesion to the base, anti-corrosion and anti-aging ability.

For example, in an example, the enamel coating is formed by static spraying. In an example, the pulp is painted on the external lateral surface of the entire tube, and heated to about 300∼1,000°C for its diffusion. In an example, the tube is impregnated in the pulp so that a layer of pulp is covered on the external lateral surface of the entire tube and heated to about 300∼1,000°C for its diffusion.

During STEM boring, the ceramic or enamel coating is more durable than general coatings (such as resin coating) and makes the front end of the tube-shaped electrode resist a higher rinse pressure during STEM boring without peeling off. The STEM boring process at higher pressure is suitable to make deeper holes, such as possibly required cooling holes with bigger diameter in turbine blade in the future.

### Example 1

In this example, a lab borer is used to make holes in the nickel alloy base. The voltage imposed on the electrode is about 15V. The current gradually decreases during boring, and is about 0.23-0.12A. The pressurized electrolyte is sent by 12V and 0.16A pumps from the electrolyte tank to the electrolyte manifold and then transmitted from electrolyte manifold through the passage in the electrode to the front end of the electrode.

H₂SO₄ solution, NaNO₃ solution containing HEDP-2Na, and NaNO₃ solution containing EDTA are used as electrolyte for boring, respectively, to determine the metal ion concentration of each electrolyte after boring. The bored nickel alloy base composition (it is assumed that it contains only the following components), composition of each electrolyte, and metal ion concentration (in ppm) of each electrolyte after boring are expressed as shown in the table below:

| | Metal base | 25% H₂SO₄ | 20%NaNO₃ + 0.5% HEDP | 20% NaNO₃ + 0.5% EDTA |
|---|---|---|---|---|
| Al | 3.2 | 3.4 | 9.5 | 3.5 |
| Co | 10.2 | 10.0 | 9.7 | 10.3 |
| Cr | 15.0 | 15.2 | 13.7 | 15.0 |
| Ni | 64.7 | 59.2 | 62.2 | 67.0 |
| Mo | 1.6 | 1.8 | 2.0 | 1.7 |
| Ti | 5.3 | 10.3 | 2.8 | 2.4 |

Unless otherwise noted, the percents in Examples 1-3 are mass percents.

It can be seen from the above table that the HEDP-containing electrolyte after boring has much higher Al content than H₂SO₄ solution electrolyte and EDTA-containing electrolyte. Thus, HEDP-containing electrolyte can chelate the sparingly soluble metal Al much better during boring process than the other electrolytes. It also can be seen that the HEDP-containing electrolyte after boring has much higher Ni content than H₂SO₄ solution, and similar Ni content to the metal base. Thus, HEDP can chelate Ni very well.

### Example 2

In this example, the device and system shown in Fig. 1 are used for boring in the nickel alloy base. The neutral solution containing 20% NaNO₃ is used as electrolyte to test the effects of traditional continuous feeding boring method and the intermittent feeding (the electrode stops for 5 s every time that it is fed to 1 mm depth; the electrolyte is rinsed at all times) boring method described in this disclosure on the maximum bore depth under three conditions respectively. The parameters and results are listed below:

| Voltage (V) | Feed rate (mm/min) | Electrolyte pressure (MPa) | Feeding | Maximum bore depth (mm) |
|---|---|---|---|---|
| 13.2 | 1.4 | 0.65 | Continuous | 12 |
| | | | Intermittent | 32 |
| 13.2 | 1.2 | 0.7 | Continuous | 48 |
| | | | Intermittent | 94 |
| 13.2 | 1.0 | 0.7 | Continuous | 103 |
| | | | Intermittent | 177 |

### Example 3

In this example, the device and system shown in Fig. 1 are also used for boring in the nickel alloy base. The maximum bore depths obtained when the neutral solution containing 20% NaNO₃ and the solution composed of 20% NaNO₃ and 5% HEDP-2Na are used as electrolyte under two experimental conditions are compared. These two experimental conditions are based on continuous feeding. As shown in the table below, Experiments 1-4 are performed under Condition 1. The maximum bore depth obtained from Experiments 1-3, in which neutral solution containing 20%NaNO₃ is used as electrolyte, is less than 20 mm, while the maximum bore depth obtained from Experiment 4, in which the solution composed of 20% NaNO₃ and 5% HEDP-2Na is used as electrolyte, is 295 mm, much higher than that from Experiments 1-3. Similarly, Experiments 5-8 are performed under Condition 2. Maximum bore depth obtained from Experiments 5-7, in which the neutral solution containing 20% NaNO₃ is used as electrolyte, is less than 35 mm, while the maximum bore depth obtained from Experiment 8, in which the solution composed o 20% NaNO₃ and 5% HEDP-2Na is used as electrolyte, is 285 mm, much higher than that from Experiments 5-7 too.

| | Voltage (V) | Feed rate (mm/min) | Electrolyte pressure (MPa) | Electrolyte | Maximum bore depth (mm) |
|---|---|---|---|---|---|
| Condition 1 | 13.2 | 1.4 | 0.7 | 20% NaNO₃ | 14 |
| | | | | 20% NaNO₃ | 17 |
| | | | | 20% NaNO₃ | 12 |
| | | | | 20% NaNO₃ +5% HEDP-2Na | 295 |
| Condition 2 | 13.2 | 0.8 | 0.7 | 20% NaNO₃ | 32 |
| | | | | 20% NaNO₃ | 29 |
| | | | | 20% NaNO₃ | 27 |
| | | | | 20% NaNO₃+5% HEDP-2Na | 285 |

## Claims

1. An electrochemical machining (ECM) method, comprising:
feeding forward a tool electrode to drill a hole in a substrate; wherein feeding forward the tool electrode comprises:
(a) moving forward the tool electrode along a depth direction of the hole being drilled, for a distance;
(b) stopping moving forward the tool electrode along the depth direction, for a period; and
(c) repeating steps (a) and (b) until a drilling depth of the hole reaches a pre-set value; and
flushing an electrolyte at the front tip area of the tool electrode, wherein the electrolyte comprises a solvent, an inorganic salt and a chelating agent, the chelating agent comprising organic phosphonic acid or organic phosphonate, wherein the organic phosphonic acid comprises 1-hydroxy ethylidene-1,1-diphosphonic acid (HEDP) and the organic phosphonate comprises HEDP's sodium salt.

2. The ECM method according to claim1, wherein the organic phosphonic acid or the organic phosphonate is present in an amount from 1% to 30% by weight.

3. The ECM method according to claim 2, wherein the organic phosphonic acid or the organic phosphonate is present in an amount from 1% to 20% by weight.

4. The ECM method according to claim 3, wherein the organic phosphonic acid or the organic phosphonate is present in an amount from 1 to 5 % by weight.

5. The ECM method according to any one of claims 1 to 4, wherein the electrolyte has a pH value ranging from 4 to 7.

6. The ECM method according to claim 5, wherein the electrolyte has a pH value ranging from 5 to 6.

7. The ECM method according to claim 1, wherein the distance ranges from 0.1mm to 2mm.

8. The ECM method according to claim 1, wherein the period ranges from 1s to 5s.

9. The ECM method according to any one of claims 1 to 8, wherein the tool electrode comprises a tube electrode.

## Patentansprüche

1. Elektrochemisches Bearbeitungsverfahren (ECM), umfassend:
Vorschieben einer Werkzeugelektrode zum Bohren eines Lochs in ein Substrat; wobei das Vorschieben der Werkzeugelektrode umfasst:
(a) Vorwärtsbewegen der Werkzeugelektrode entlang einer Tiefenrichtung des Lochs, das gebohrt wird, für einen Abstand;
(b) Stoppen der Vorwärtsbewegung der Werkzeugelektrode entlang der Tiefenrichtung für einen Zeitraum; und
(c) Wiederholen der Schritte (a) und (b), bis eine Bohrtiefe des Lochs einen voreingestellten Wert erreicht; und
Spülen eines Elektrolyts am vorderen Spitzenbereich der Werkzeugelektrode, wobei das Elektrolyt ein Lösemittel, ein anorganisches Salz und einen Chelatbildner umfasst, wobei der Chelatbildner eine organische Phosphonsäure oder ein organisches Phosphonat umfasst, wobei die organische Phosphonsäure 1-Hydroxy-ethyliden-1,1-diphosphonsäure (HEDP) umfasst und das organische Phosphonat HEDP-Natriumsalz umfasst.

2. ECM-Verfahren nach Anspruch 1, wobei die organische Phosphonsäure oder das organische Phosphonat in einer Menge von 1 Gew.-% bis 30 Gew.-% vorliegen.

3. ECM-Verfahren nach Anspruch 2, wobei die organische Phosphonsäure oder das organische Phosphonat in einer Menge von 1 Gew.-% bis 20 Gew.-% vorliegen.

4. ECM-Verfahren nach Anspruch 3, wobei die organische Phosphonsäure oder das organische Phosphonat in einer Menge von 1 Gew.-% bis 5 Gew.-% vorliegen.

5. ECM-Verfahren nach einem der Ansprüche 1 bis 4, wobei das Elektrolyt einen pH-Wert im Bereich von 4 bis 7 aufweist.

6. ECM-Verfahren nach Anspruch 5, wobei das Elektrolyt einen pH-Wert im Bereich von 5 bis 6 aufweist.

7. ECM-Verfahren nach Anspruch 1, wobei der Abstand in einem Bereich von 0,1 mm bis 2 mm liegt.

8. ECM-Verfahren nach Anspruch 1, wobei der Zeitraum in einem Bereich von 1 s bis 5 s liegt.

9. ECM-Verfahren nach einem der Ansprüche 1 bis 8, wobei die Werkzeugelektrode eine Rohrelektrode umfasst.

## Revendications

1. Procédé d'usinage électrochimique (ECM), comprenant :
l'avance d'une électrode-outil pour percer un trou dans un substrat ; l'avance de l'électrode-outil comprenant les étapes suivantes :
(a) déplacer vers l'avant l'électrode-outil le long d'une direction de la profondeur du trou en train d'être percé, sur une distance ;
(b) arrêter de déplacer vers l'avant l'électrode-outil le long de la direction de la profondeur, pendant une durée ; et
(c) répéter les étapes (a) et (b) jusqu'à ce qu'une profondeur de perçage du trou atteigne une valeur préréglée ; et
l'injection d'un électrolyte dans la zone de la pointe avant de l'électrode-outil, l'électrolyte comprenant un solvant, un sel inorganique et un chélateur, le chélateur comprenant un acide phosphonique organique ou un phosphonate organique, l'acide phosphonique organique comprenant l'acide 1-hydroxyéthylidène-1,1-diphosphonique (HEDP) et le phosphonate organique comprenant le sel sodique de HEDP.

2. Procédé ECM selon la revendication 1, dans lequel l'acide phosphonique organique ou le phosphonate organique est présent dans une quantité de 1 % à 30 % en poids.

3. Procédé ECM selon la revendication 2, dans lequel l'acide phosphonique organique ou le phosphonate organique est présent dans une quantité de 1 % à 20 % en poids.

4. Procédé ECM selon la revendication 3, dans lequel l'acide phosphonique organique ou le phosphonate organique est présent dans une quantité de 1 à 5 % en poids.

5. Procédé ECM selon l'une quelconque des revendications 1 à 4, dans lequel l'électrolyte a une valeur de pH allant de 4 à 7.

6. Procédé ECM selon la revendication 5, dans lequel l'électrolyte a une valeur de pH allant de 5 à 6.

7. Procédé ECM selon la revendication 1, dans lequel la distance va de 0,1 mm à 2 mm.

8. Procédé ECM selon la revendication 1, dans lequel la durée va de 1 s à 5 s.

9. Procédé ECM selon l'une quelconque des revendications 1 à 8, dans lequel l'électrode-outil comprend une électrode tubulaire.
